# EUROPÄISCHE PATENTSCHRIFT

(11) **EP 3 399 218 B1**
(45) Veröffentlichungstag und Bekanntmachung des Hinweises auf die Patenterteilung: **13.01.2021**
(21) Anmeldenummer: 18000345.1
(22) Anmeldetag: 11.04.2018
(51) Int. Cl.: F16K 5/04

(54) **ANORDNUNG ZUR LEITUNG, BEHANDLUNG UND/ODER MESSUNG EINES FLUIDS**
ASSEMBLY FOR CONDUCTING, TREATMENT AND/OR MEASUREMENT OF A FLUID
DISPOSITIF DE CONDUITE, DE TRAITEMENT ET/OU DE MESURE D'UN FLUIDE

(30) Priorität: 05.05.2017 DE 102017004372
(43) Veröffentlichungstag der Anmeldung: 07.11.2018
(73) Patentinhaber: Diehl Metering GmbH, 91522 Ansbach (DE); Diehl Metering S.A.S., 68300 Saint-Louis (FR)
(72) Erfinder: Ross, Benjamin, 57392 Schmallenberg (DE); Neidinger, Jan, 77731 Willstätt (DE); Schlegel, Oliver, 71711 Murr (DE); Fischer, Benjamin, 76307 Karlsbad (DE); Schimetzki, Michael, 76137 Karlsruhe (DE); Chinh-Duc, Nguyen, 75177 Pforzheim (DE)
(74) Vertreter: Diehl Patentabteilung

(56) Entgegenhaltungen:
- EP-A1- 2 385 280
- EP-A1- 2 390 540
- WO-A1-2014/029347
- NL-A- 8 302 467
- US-A- 5 706 851

## Beschreibung

Die vorliegende Erfindung betrifft eine Anordnung zum Einbau in eine Rohrleitung eines Fluidnetzes, gemäß dem Oberbegriff des Anspruchs 1.

### Technologischer Hintergrund

Gattungsgemäße Anordnungen werden z. B. in Trinkwassernetzen dazu verwendet, zusätzliche Funktionseinheiten durch entsprechendes Fachpersonal an die Trinkwasserinstallation anzuschließen.

In der Verordnung über die Qualität von Wasser für den menschlichen Gebrauch (TrinkwV) ist z. B. geregelt, dass chemische und mikrobielle Kontaminationen sowie unerwünschte Ablagerungen in Trinkwasser-Installationen vermieden werden müssen. Dementsprechend wichtig ist dabei die Überwachung der betreffenden allgemeinen, chemischen sowie mikrobiologischen Parameter zur Untersuchung von Trinkwasser. Diese Parameter werden heutzutage z. B. durch Beprobung und anschließender Laboruntersuchung oder anhand von im Gelände durchgeführter Schnelltests ermittelt. Im Falle einer Grenzwertüberschreitung muss zudem eine Wasserbehandlung bzw. eine Dekontamination durchgeführt werden. Eine Implementierung von Zusatzfunktionen, wie z. B. Wasserbehandlung oder Wasserparametermessung, innerhalb der Trinkwasser-Installationen ist jedoch mit großem Montage- und Kostenaufwand verbunden, da derartige Zusatzfunktionen durch Fachpersonal installiert und gewartet werden müssen.

### Druckschriftlicher Stand der Technik

Aus der EP 2 390 540 A1 ist eine Anordnung zum Einbau in eine Rohrleitung eines Fluidnetzes gemäß dem Oberbegriff des Anspruchs 1 bekannt. Es handelt sich hierbei um eine Ventilanordnung zum Einsatz in ein in einer Rohrleitung installiertes Anschlussgehäuse. Das Anschlussgehäuse umfasst eine einseitig offene Zugangsöffnung, in die ein Obturator mit einem Aufnahmeraum und mit einem Zulauf sowie Ablauf drehbar einsetzbar ist. Innerhalb des Obturators befindet sich ein zylindrischer Filtereinsatz. Oberseitig ist ein Deckel vorgesehen, der unterseitige Vorsprünge aufweist, die in oberseitige Ausnehmungen am Obturator eingreifen, sodass durch Drehen des Deckels der Obturator sowie der Filtereinsatz verdreht werden können. Der Deckel wird am Anschlussgehäuse fixiert, indem radial umlaufende Vorsprünge in radial umlaufende Nuten am oberen Teil des Anschlussgehäuses eingreifen. Hierdurch wird der Obturator in der Ausnehmung des Anschlussgehäuses gehalten.

Aus der NL 8 302 467 A ist eine vergleichbare Anordnung zu entnehmen innerhalb dessen sich das Funktionsteil befindet. Die Fixierung des Kernstücks sowie des Funktionsteils erfolgt über einen Deckel, welcher auch das Funktionsteil bedeckt und eine umlaufende Nut aufweist, in die ein umlaufender Vorsprung des Anschlussgehäuses eingreift, wodurch Deckel und Anschlussgehäuse miteinander fixiert werden.

Die DE 20 2015 101 027 U1 beschreibt ein Anschlussstück zum Einbau in eine Rohr- bzw. Wasserleitung sowie eine aus mehreren Anschlussstücken bestehende Anschlussanordnung. Das Anschlussstück besitzt einen Zulauf und einen Ablauf, die einander gegenüberliegend entlang einer Achse angeordnet sind. Mittels des Zulaufs und des Ablaufs wird das Anschlussstück in die Rohrleitung eingesetzt. Über ober- und unterseitig angeordnete Flansche können Funktionseinheiten (sogenannte Wasserbehandlungsgeräte), wie z. B. Wasserenthärter oder Wasserfilter, an das Anschlussstück angeschlossen werden. Das jeweilige Anschlussstück ist hierbei derart aufgebaut, dass das Wasser zunächst das Anschlussstück und anschließend vom Anschlussstück aus die Wasserbehandlungsgeräte durchströmt. Dadurch wird gewährleistet, dass Wasser beide Wasserbehandlungsgeräte beim Durchfließen des Anschlussstücks passiert. Jedoch kann kein Wasserdurchfluss erfolgen, sobald eines der Wasserbehandlungsgeräte ausgebaut oder defekt ist. Bei einem Ausbau oder Defekt muss daher der Wasserfluss z. B. über eine Hauptabschaltung abgeriegelt werden. Ferner sind die Installation und der Einbau der Funktionseinheiten durch Anflanschen umständlich, wartungsanfällig und erfordern ein Öffnen des Wassersystems.

Die US 5,706,851 A offenbart ein Ventil für Anwendungen bei hoher Temperatur in einem Direktreduktion-Reaktorsystem mit einem Ventilgehäuse, welches einen zylindrischen Körper sowie damit verbundene Flansche umfasst. Das Ventilgehäuse ist zum Einbau in eine Rohrleitung bestimmt. Das Ventilgehäuse umfasst einen Zulauf und einen Ablauf sowie eine Anschlussöffnung zum Anschließen eines zylindrischen Steckers. Außerdem ist in dem Ventilgehäuse ein austauschbares zylindrisches Verschleißteil mit Öffnungen vorgesehen, welche bei Drehung des Verschleißteils den Zu- und Ablauf des Ventils je nach deren Stellung sperren oder freigeben. Das Verschleißteil weist eine Aufnahme zum Anschließen des Steckers auf, wobei die Aufnahme sowie die Anschlussöffnung des Ventilgehäuses in gleicher Richtung orientiert sind. Der Stecker ist in das Verschleißteil eingesetzt. Das Drehen des Verschleißteils erfolgt durch das Drehen des in dem Verschleißteil angeordneten Steckers, wobei durch Drehung des Steckers der Durchfluss durch das Ventilgehäuse und das Verschleißteil freigebbar und/oder sperrbar ist. Eine Abdeckung fixiert das Verschleißteil am Ventilgehäuse drehbar. Der Stecker und die Abdeckung weisen Mittel zum Herstellen einer mechanisch lösbaren Verbindung zwischen Stecker und Abdeckung auf. An dem Stecker befindet sich eine Welle, die mit einem Stellmotor antreibbar ist.

### Aufgabe der vorliegenden Erfindung

Ausgehend vom Stand der Technik besteht die Aufgabe der vorliegenden Erfindung darin, eine Anordnung zur Verfügung zu stellen, bei den Zusatzfunktionen in einfacher Weise, schnell und wartungsarm bei verbesserter Sicherheit installiert und deinstalliert werden können.

### Lösung der Aufgabe

Die vorstehende Aufgabe wird durch die gesamte Lehre des Anspruchs 1 gelöst. Zweckmäßige Ausgestaltungen der Erfindung sind in den Unteransprüchen beansprucht.

Erfindungsgemäß weist das Anschlussgehäuse ein drehbar angeordnetes Kernstück auf, durch dessen Drehung der Durchfluss des Fluids durch das Anschlussgehäuse sperrbar oder freigebbar ist. Das Kernstück umfasst eine Aufnahme, die zum Anschließen einer Funktionseinheit hergerichtet ist. Die Aufnahme sowie die Anschlussöffnung sind hierbei in gleicher Richtung orientiert, d. h. in Anschlussrichtung der Funktionseinheit, sodass die Funktionseinheit in angeschlossenem Zustand in die Aufnahme eingreifen kann. Dadurch wird es ermöglicht, dass die Funktionseinheit direkt in die Aufnahme des Kernstücks eingesetzt werden kann. Durch eine Drehung der Funktionseinheit wird der Durchfluss durch das Anschlussgehäuse und das Kernstück freigegeben und/oder gesperrt, sodass die Arbeitsschritte Installation bzw. Deinstallation der Funktionseinheit zugleich das Sperren und/oder Freigeben des Durchflusses umfassen. Dadurch können Zusatzfunktionen vom Benutzer in einfacher Weise und ohne zusätzliches Fachpersonal implementiert werden. Zudem wird die Sicherheit bei der Installation und Deinstallation der Funktionseinheit bzw. der Zusatzfunktion in besonderem Maße verbessert.

Der Zulauf und der Ablauf können vorzugsweise entlang einer Durchflussachse angeordnet sein, wobei die Anschlussrichtung der Funktionseinheit orthogonal zur Durchflussachse verlaufen kann. Dementsprechend kann die Funktionseinheit oder zumindest ein Teil der Funktionseinheit im Bereich der Durchflussachse positioniert werden. Dadurch wird entweder die Funktionseinheit von Fluid durchströmt oder das Fluid kann entgegen der Anschlussrichtung in Richtung Funktionseinheit geleitet werden.

Zweckmäßigerweise umfasst das Kernstück einen Kernstückzulauf und einen Kernstückablauf, die vorzugsweise gegenüberliegend angeordnet sind, sodass das Fluid durch das Kernstück hindurch strömen kann, indem der Zulauf des Anschlussgehäuses mit dem Kernstückzulauf und der Ablauf des Anschlussgehäuses mit dem Kernstückablauf verbunden sind.

Ferner können der Kernstückzulauf sowie der Kernstückablauf jeweils mit der Aufnahme verbunden sein. Dadurch können der Kernstückzulauf sowie der Kernstückablauf mit der in die Aufnahme eingreifenden Funktionseinheit gekoppelt werden, sodass das Fluid durch die Funktionseinheit hindurch oder daran vorbei geleitet werden kann. Dadurch können Zusatzfunktionen über die Funktionseinheit implementiert werden, die wahlweise einen Fluidkontakt oder eine Durchströmung mit Fluid oder keinen Fluidkontakt benötigen.
Vorzugsweise werden durch das Drehen des Kernstücks innerhalb des Anschlussgehäuses der Zulauf und der Ablauf des Anschlussgehäuses sowie der Kernstückzulauf und der Kernstückablauf des Kernstücks in Fluidverbindung gebracht. Insbesondere kann das Kernstück derart orientiert werden, dass der Zulauf, der Ablauf, der Kernstückzulauf sowie der Kernstückablauf entlang einer gemeinsamen Achse, insbesondere entlang der Durchflussachse, angeordnet sind.

Das Kernstück kann in einfacher Weise in die Anschlussöffnung entlang der Anschlussrichtung eingesetzt werden. Das Anschlussgehäuse weist hierzu eine korrespondierende, insbesondere zylindrische oder sphärische, Ausnehmung auf, in die das Kernstück eingesetzt werden kann. Daraus resultiert der Vorteil, dass die Montage des Kernstücks in einfacher Weise erfolgen kann. Die Montagezeit und die damit einhergehenden Montagekosten können dadurch erheblich gesenkt werden.

Ferner kann ein Dichtungselement im Bereich des Zulaufs und/oder des Ablaufs vorgesehen sein, welches das Anschlussgehäuse gegen das Kernstück abdichtet. Das Dichtungselement ist hierbei an die, vorzugsweise zylindrische oder kugelförmige bzw. abgeflachte kugelförmige, Kontur des Kernstücks angepasst. Das Dichtelement kann z. B. in einfacher Weise in den Zulauf bzw. den Ablauf des Anschlussgehäuses eingesetzt oder daran angeschlossen werden. Durch derartige Dichtelemente wird die Sicherheit der gesamten Anordnung in besonderem Maße verbessert. Alternativ kann das Dichtelement auch am Kernstück angeordnet sein.

Vorzugsweise umfasst das Dichtungselement ein radial, insbesondere gegen das Anschlussgehäuse, wirkendes Dichtmittel und ein axial, insbesondere gegen das Kernstück, wirkendes Dichtmittel. In bevorzugter Weise kann als Dichtmittel ein O-Ring vorgesehen sein, der z. B Kautschuk, Polytetrafluorethylen (PTFE), Perfluorkautschuk (FFKM, FFPM) oder Polyethylen (PE) gefertigt ist.

Gemäß der Erfindung ist das Kernstück über eine Halterung innerhalb des Anschlussgehäuses drehbar gehalten. Beispielsweise kann als Halterung ein Deckel oder Haltering vorgesehen sein, der über Befestigungsmittel (z. B. Schrauben, Stifte oder Bolzen) an entsprechende Befestigungsmittel (z. B. ein Gewinde) des Anschlussgehäuses befestigt wird. Die Halterung ist hierbei derart angeordnet, dass die Drehbewegung des Kernstücks nicht verhindert wird. Dadurch wird eine sichere Befestigung des Kernstücks am und/oder im Anschlussgehäuse ohne Einschränkung der Drehfunktion gewährleistet. Jedoch kann das Kernstück im Falle eines Defekts in einfacher Weise durch die Deinstallation der Halterung gewechselt werden. Alternativ kann auch die Halterung selbst ein Gewinde umfassen, mit dem es auf ein korrespondierendes Gewinde am Anschlussgehäuse aufgeschraubt werden kann.

Gemäß der Erfindung ist die Funktionseinheit mit der Aufnahme verbunden. Insbesondere kann sie, vorzugsweise formschlüssig, in die Aufnahme eingreifen. Gemäß der Erfindung erfolgt das Drehen des Kernstücks durch das Drehen der mit der Aufnahme verbundenen Funktionseinheit, indem eine Kraftübertragung der Drehbewegung von der Funktionseinheit auf das Kernstück gewährleistet wird.

Ferner ist die Funktionseinheit derart ausgestaltet, dass diese in mindestens einer Drehstellung verriegelbar ist bzw. mit der Halterung verriegelbar ist. Dadurch wird die Funktionseinheit auch bei anstehendem Fluiddruck in Position gehalten, wodurch die Sicherheit noch zusätzlich verbessert wird.

Erfindungsgemäß weisen die Funktionseinheit und die Halterung Mittel zum Herstellen einer mechanisch lösbaren Verbindung zwischen Funktionseinheit und Halterung auf. Daraus resultiert der Vorteil, dass die Funktionseinheit an der Halterung angebracht werden kann.

Vorzugsweise sind als Mittel zum Herstellen einer mechanisch lösbaren Verbindung an der Funktionseinheit Vorsprünge vorgesehen, die in korrespondierende Ausnehmungen des Anschlussgehäuses und/oder der Halterung eingreifen. Dadurch kann ein fehlerloser Einbau der Funktionseinheit realisiert werden, indem z. B. die Vorsprünge derart ausgestaltet sind, dass diese nur in einer Orientierung gemäß eines Schlüssel-Schloss-Prinzips in die Ausnehmungen einsetzbar sind. Ferner können zusätzliche Ausgestaltungen der Ausnehmungen, wie z. B. unterschiedliche Nuten bzw. Nutformen, L-förmige Ausnehmungen vorgesehen sein, durch welche die Halterungsfunktion noch zusätzlich verbessert wird.

Gemäß einer bevorzugten Ausgestaltung ist als Mittel zum Herstellen einer mechanisch lösbaren Verbindung bzw. Verriegelung ein Bajonettverschluss vorgesehen, dessen verbindende Elemente, wie z. B. eine abgewinkelte Ausnehmung und ein in die abgewinkelte Ausnehmung einschiebbarer Vorsprung, an der Funktionseinheit und der Halterung angeordnet sind. Daraus resultiert der Vorteil, dass die Funktionseinheit am Anschlussgehäuse und/oder der Halterung durch eine einfache Drehbewegung fixiert werden kann, wodurch gleichzeitig die Drehbewegung des Kernstücks beschränkt wird. Der Bajonettverschluss ist ferner dazu hergerichtet, die Dichtmittel der Funktionseinheit, der Halterung, der Dichtungselemente und/oder des Kernstücks vorzuspannen.

Zweckmäßigerweise kann die Funktionseinheit einen Durchflusskanal aufweisen, welcher sich im angeschlossenen Zustand innerhalb des Kernstücks befindet und mit Kernstückzulauf sowie Kernstückablauf verbunden ist, sodass eine Durchströmung der Funktionseinheit ermöglicht wird.

Durch die Auswahl einer bestimmten Funktionseinheit kann eine beliebige Zusatzfunktion festgelegt werden. Hierzu weist die Funktionseinheit z. B. eine Funktionsvorrichtung innerhalb des Durchflusskanals, z. B. einen Filter, oder ein Funktionsmodul auf, welches die gewünschte Zusatzfunktion umfasst. Entsprechend der jeweiligen Ausgestaltung kann es sich bei der Funktionseinheit beispielsweise um eine Platzhalter-Funktionseinheit, eine Entkalkungs-Funktionseinheit, eine Filter-Funktionseinheit, eine Überwachungs-Funktionseinheit, eine Keimreduzierungs-Funktionseinheit, eine Druckminderungs- und/oder Druckregulierungs-Funktionseinheit, eine Funktionseinheit zur Bestimmung chemischer und/oder mikrobiologischer Parameter, ein Daten-Funktionseinheit z. B. zum Speichern von Daten, eine Kommunikations-Funktionseinheit z. B. zur Funkübertragung der angefallenen Daten, eine Anzeige-Funktionseinheit und/oder eine Funktionseinheit zur Bestimmung von pH-Wert, elektrische Leitfähigkeit, Nitrat, Nitrit, Sulfat, Kohlenstoffdioxid, Eisen, Fluorid, Chlor, Kupfer, Phosphat, Silizium, Ammonium, Härte, Durchflussmenge, Temperatur, Karbonat, Salzgehalt, Keimanteil und/oder Metallanteil handeln. Dementsprechend ergeben sich vielfältigste Zusatzfunktionen, die in das Fluidleitungsnetz in einfacher Weise installiert werden können.

Vorzugsweise sind an der Funktionseinheit und/oder im Bereich der Funktionseinheit am Kernstück Dichtmittel vorgesehen, wie z. B. O-Ringe, die das Kernstück gegen die Funktionseinheit abdichten. Dadurch kann das Fluid durch das Kernstück und die Funktionseinheit hindurchströmen, ohne dass Fluid an den Übergängen der einzelnen Einheiten austritt. Die Betriebssicherheit der Anordnung wird durch diese Ausgestaltung noch zusätzlich verbessert.

Gemäß einer bevorzugten Ausgestaltung weist die Funktionseinheit eine eigene Anschlussgeometrie auf. Dadurch kann die Funktionseinheit in einfacher Weise als herstellerseitig vorkonfektioniertes, modulares Bauteil an das Anschlussgehäuse, die Aufnahme des Kernstücks und/oder die Halterung angeschlossen werden. Daraus resultiert der Vorteil, dass durch die jeweiligen Anordnungen sowie Funktionseinheiten ein sogenanntes Baukastenkonzept realisiert werden kann, welches dem Benutzer die Möglichkeit bietet, Zusatzfunktionen einfach und schnell ohne die Hilfe von Fachpersonal zu installieren bzw. deinstallieren.

### Beschreibung der Erfindung anhand von Ausführungsbeispielen

Zweckmäßige Ausgestaltungen der vorliegenden Erfindung werden anhand von Zeichnungsfiguren nachstehend näher erläutert. Es zeigen:
- Fig. 1: eine vereinfachte perspektivische Darstellung einer ersten Ausgestaltung der erfindungsgemäßen Anordnung;
- Fig. 2: eine vereinfachte perspektivische Darstellung einer weiteren Ausgestaltung der erfindungsgemäßen Anordnung;
- Fig. 3: eine vereinfachte perspektivische Darstellung der Anschlussrichtung sowie der Durchflussachse anhand des Anschlussgehäuses der Anordnung aus Fig. 2;
- Fig. 4: eine vereinfachte Schnittdarstellung durch eine weitere Ausgestaltung der erfindungsgemäßen Anordnung, sowie
- Fig. 5: eine stark vereinfachte Draufsicht auf eine weitere Ausgestaltung der erfindungsgemäßen Anordnung.

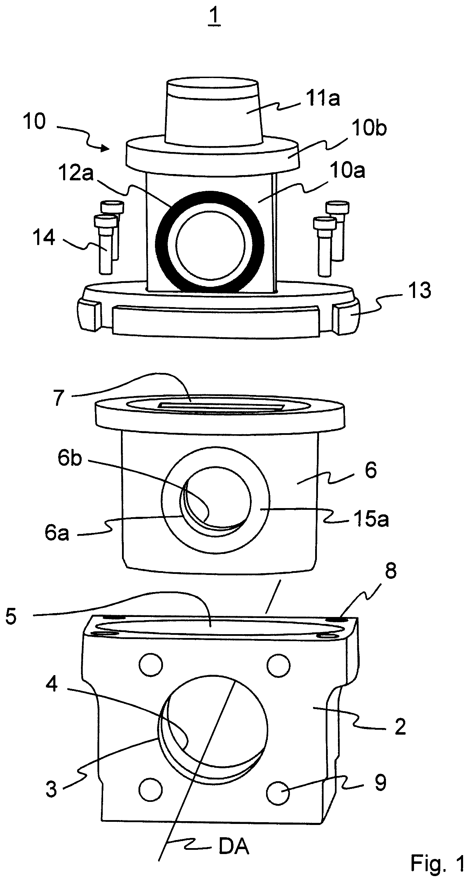

Bezugsziffer 1 in Fig. 1 bezeichnet eine erfindungsgemäße Anordnung zur Leitung, Behandlung und/oder Parameterbestimmung bzw. Messung eines Fluids. Die Anordnung 1 ist Teil eines, in Fig. 1 nicht dargestellten, Fluidleitungsnetzes, wie z. B. ein Trinkwasserversorgungsnetz. Die Anordnung 1 umfasst ein Anschlussgehäuse 2, welches einen Zulauf 3 sowie einen Ablauf 4 aufweist, mittels dem das Anschlussgehäuse 2 z. B. in eine Rohrleitung des Fluidleitungsnetzes eingesetzt werden kann. Dies kann beispielsweise mittels in Gewindebohrungen 9 des Anschlussgehäuses 2 eingreifende, in den Fig. nicht dargestellte, Verbindungsmittel erfolgen. Die Durchflussrichtung des Fluids erfolgt in der Regel vom Zulauf 3 zum Ablauf 4 entlang einer Durchflussachse DA.

Ferner weist das Anschlussgehäuse 2 eine Anschlussöffnung 5 auf, an die z. B. eine Funktionseinheit 10 angeschlossen werden kann. In einer zylindrischen Ausnehmung innerhalb des Anschlussgehäuses 2 ist unterhalb der Anschlussöffnung 5 ein drehbar angeordnetes, zylindrisches Kernstück 6 vorgesehen. Somit kann das Kernstück 6 bei der Montage in einfacher Weise über die Anschlussöffnung 5 in die zylindrische Ausnehmung des Anschlussgehäuses 2 eingesetzt werden. Das Kernstück 6 umfasst einen Kernstückzulauf 6a und einen gegenüberliegend angeordneten Kernstückablauf 6b, mittels denen das Fluid durch das Kernstück 6 vom Kernstückzulauf 6a zum Kernstückablauf 6b entlang der Durchströmungsachse DA strömen kann. Dementsprechend kann durch eine Drehung des Kernstücks 6 der Durchfluss des Fluids durch das Anschlussgehäuse 2 gesperrt werden, indem der Kernstückzulauf 6a sowie der Kernstückablauf 6b durch die Rotation des Kernstücks 6 aus der Flucht von Zulauf 3 und Ablauf 4, d. h. aus der Durchströmungsachse DA, gedreht werden. Dementsprechend kann der Durchfluss des Fluids durch das Anschlussgehäuse 2 wieder freigegeben werden, indem der Kernstückzulauf 6a sowie der Kernstückablauf 6b durch die Rotation des Kernstücks 6 in die Durchströmungsachse DA gedreht werden. Zudem weist das Kernstück 6 eine Aufnahme 7 auf, die ebenso wie die Anschlussöffnung 5 in Richtung Funktionseinheit 10 orientiert ist, d. h. in gleicher Richtung. Dadurch kann die Funktionseinheit 10 im angeschlossenen Zustand in die Aufnahme 7 eingreifen. Der Kernstückzulauf 6a sowie der Kernstückablauf 6b sind hierbei jeweils mit der Aufnahme 7 verbunden, sodass das Fluid in Richtung Funktionseinheit 10 strömen kann.

Die Funktionseinheit 10 ist wahlweise zur Leitung, Behandlung und/oder Parameterbestimmung des Fluids hergerichtet. Dazu umfasst die Funktionseinheit 10, wie in Fig. 1 gezeigt, ein Funktionsmodul 11a, das z. B. Mittel zur Entkalkung, Filterung, Druckminderung, Überwachung, Keimreduzierung, Bestimmung chemischer und mikrobiologischer Parameter, Bestimmung von pH-Wert, elektrische Leitfähigkeit, Nitrat, Nitrit, Sulfat, Kohlenstoffdioxid, Eisen, Fluorid, Chlor, Kupfer, Phosphat, Silizium, Ammonium, Härte, Temperatur, Durchflussmenge, Karbonat, Salzgehalt, Keimanteil oder Metallanteil, Datenspeicherung, Kommunikation z. B. über Funk und/oder Anzeige umfasst.

Ferner umfasst die Funktionseinheit 10 einen Einsatz 10a, der vorzugsweise formschlüssig in die Aufnahme 7 des Kernstücks 6 eingreift und einen Durchflusskanal aufweist, der Kernstückzulauf 6a sowie Kernstückablauf 6b verbindet und von Fluid durchströmt wird. Zudem umfasst die Funktionseinheit 10 bzw. der Einsatz 10a ein Dichtmittel 12a und ein, in Fig. 1 nicht dargestelltes, Dichtmittel 12b, welche die Funktionseinheit 10 gegen das Kernstück 6 abdichten. Der Einsatz 10a kann zudem vorzugsweise innerhalb der Funktionseinheit 10 angeordnete, in Fig. 1 nicht dargestellte, Zu- bzw. Ablaufkanäle umfassen, die das Fluid zum Funktionsmodul 11a leiten. Zudem ist ein Deckel 10b vorgesehen, der zum Befestigen des Funktionsmoduls 10 am Anschlussgehäuse 2 hergerichtet ist. Zweckmäßigerweise kann das Kernstück 6 über eine Halterung 13 innerhalb des Anschlussgehäuses 2 drehbar gehalten werden, indem die Halterung 13 den Deckel 10b gegen das Kernstück 6 bzw. das Anschlussgehäuse 2 vorspannt. Hierzu wird die Halterung 13 z. B. über Schrauben 14 und Gewindebohrungen 8 am Anschlussgehäuse 2 befestigt. Alternativ kann auch ein Spannring oder eine andere aus dem Stand der Technik bekannte Befestigungsart vorgesehen sein.

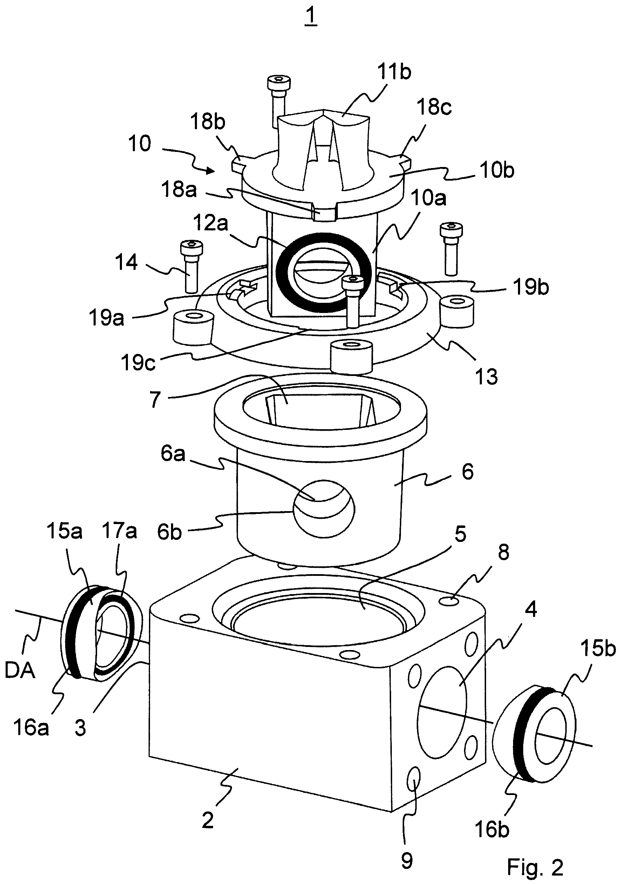

In Fig. 2 ist eine weitere zweckmäßige Ausgestaltung der vorliegenden Erfindung dargestellt. Die Anordnung 1 weist zwei Dichtungselemente 15a, 15b auf, die im Bereich des Zulaufs 3 und des Ablaufs 4 angeordnet sind und dazu dienen, das Anschlussgehäuse 2 gegen das Kernstück 6 über Dichtmittel 16a, 16b, 17a, 17b abzudichten. Alternativ können die Dichtungselemente 15a, 15b auch, wie in Fig. 1 dargestellt, innerhalb des Kernstücks 6 angeordnet werden.

Die Funktionseinheit 10 in Fig. 2 besitzt einen Griff 11b anstelle des Funktionsmoduls 11a, und dient somit lediglich als Platzhaltermodul, welches einen Fluiddurchfluss ermöglicht ohne eine Fluidbehandlung oder Parametermessung durchzuführen, d. h. nur eine fluidleitende Funktion umfasst. Jedoch kann auch die Anordnung 1 in Fig. 2 mit jeder anderen genannten Funktionseinheit 10 zur Leitung, Behandlung und/oder Parameterbestimmung des Fluids bestückt werden. Die Funktionseinheit 10 wird hierzu in einfacher Weise entlang der Anschlussrichtung AR in die Aufnahme 7 des Kernstücks 6 eingesetzt.

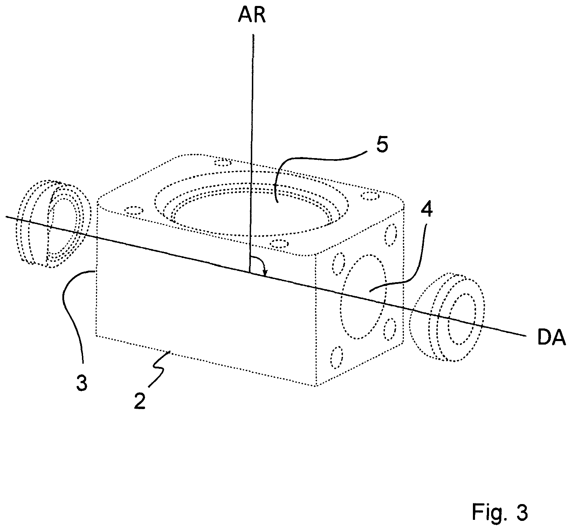

In Fig. 3 ist der Verlauf der Durchflussachse DA sowie die Achse der Anschlussrichtung AR der Funktionseinheit dargestellt. Die Durchflussachse DA und die Anschlussrichtung AR sind hierbei vorzugsweise derart angeordnet, dass diese im Wesentlichen orthogonal zueinander verlaufen.

Die Funktionseinheit 10 und die Halterung 13 weisen Mittel zum Herstellen einer mechanisch lösbaren Verbindung zwischen Funktionseinheit 10 und Anschlussgehäuse 2 bzw. Halterung 13 auf. Als Mittel sind an der Funktionseinheit 10 Vorsprünge 18a, 18b, 18c vorgesehen, die in korrespondierende Ausnehmungen 19a, 19b, 19c der Halterung 13 eingreifen. Wie in Fig. 2 dargestellt, handelt es sich hierbei um einen Bajonettverschluss, der es ermöglicht, die Funktionseinheit 10 durch Einstecken in das Kernstück 6 und anschließendes Drehen um beispielsweise 45° innerhalb des Kernstücks 6 zu fixieren sowie die Drehbewegung des Kernstücks 6 zu beschränken. Der Bajonettverschluss ist ferner dazu hergerichtet, Vorspannung auf Dichtelemente, wie z. B. Dichtmittel 12a, 12b, 17a, 17b auszuüben. Durch die Drehung der Funktionseinheit 10 wird hierbei auch das Kernstück 6 mitgedreht, wodurch der Durchfluss durch das Anschlussgehäuse 2 und das Kernstück 6 freigegeben und/oder gesperrt wird. Praktischerweise umfasst die Installation bzw. Deinstallation der Funktionseinheit 10 somit zugleich das Sperren und/oder Freigeben des Durchflusses durch das Anschlussgehäuse 2, d. h. die erfindungsgemäße Anordnung 1 umfasst zugleich einen Absperrmechanismus der Rohrleitung.

Durch die Anordnung 1 wird somit ein Mechanismus zum modularen Einbau von Funktionseinheiten 10 bzw. Funktionen in das Fluidleitungsnetz zur Verfügung gestellt. Der Benutzer kann dabei durch händisches Verdrehen der Funktionseinheit 10 bzw. des Kernstücks 6 einen standardmäßigen Fluiddurchfluss (z. B. anhand des Platzhaltermoduls, bei dem Fluid ungehindert und unbeeinflusst durch die Armatur strömt), eine Fluidumlenkung (z. B. anhand einer Umlenkung durch ein Funktionsmodul 11a mit Fluidbeeinflussung und/oder Parametermessung) oder einen Fluidstopp (z. B. bei deinstallierter Funktionseinheit 10 oder einer gewissen Stellung bzw. einem bestimmten Drehwinkel des Kernstücks 6) einstellen.

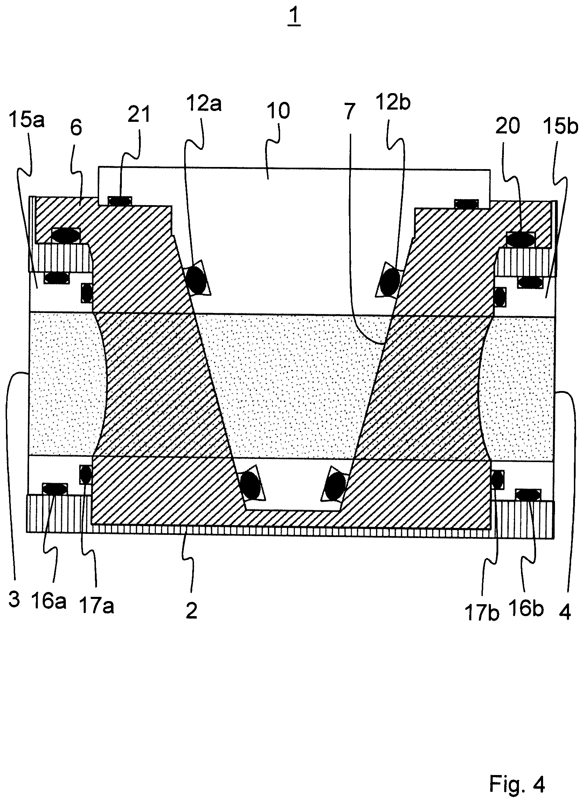

Eine besondere Anforderung der Anordnung 1 stellt die Fluiddichtigkeit des gesamten Mechanismus dar. Hierzu umfasst die Anordnung 1 verschiedene Dichtelemente, deren Anordnung im Wesentlichen in Fig. 4 mittels einer Schnittdarstellung gezeigt ist. Das Fluid ist in Fig. 4 anhand einer gepunkteten Schraffur dargestellt. Die Funktionseinheit 10 ist über zwei Dichtmittel 12a, 12b im Bereich des Fluiddurchflusses und einem zusätzlichen O-Ring 21 im Bereich der Aufnahme 7 gegen das Kernstück 6 abgedichtet. Der O-Ring 21 stellt lediglich eine zusätzliche Dichtmaßnahme dar und ist somit nicht zwingend vorzusehen. Wahlweise kann das Kernstück 6 auch über einen zusätzlichen O-Ring 20 gegen das Anschlussgehäuse 2 abgedichtet sein. Zudem können noch weitere, in Fig. 4 nicht dargestellte, Dichtelemente vorgesehen sein, die z. B. das Kernstück 6 gegen das Anschlussgehäuse 2 abdichten. Die Dichtungselemente 15a, 15b umfassen jeweils ein gegen das Anschlussgehäuse 2 radial wirkendes Dichtmittel 16a, 16b und ein gegen das Kernstück 6 axial wirkendes Dichtmittel 17a, 17b. Wie in Fig. 4 gezeigt, wird als Dichtmittel 16a, 16b, 17a, 17b vorzugsweise ein O-Ring verwendet. Dadurch entsteht ein Dichtkonzept, welches die zylindrische Fläche des Kernstücks 6 dichtet und gleichzeitig die Funktion des Drehmechanismus erlaubt, indem das Dichtungselement 15a, 15b sowie das axial gegen das Kernstück 6 wirkende Dichtmittel 17a, 17b an die Kontur des Kernstücks 6 angepasst sind.

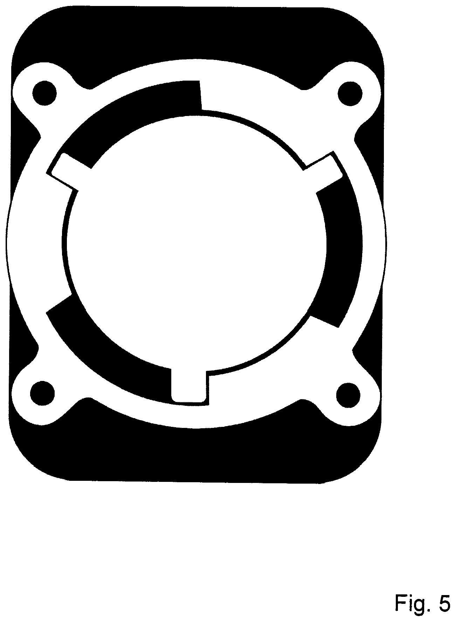

Ferner kann ein fehlerloser Einbau (gemäß "Poka-Yoke") der Funktionseinheit realisiert werden, indem z. B. die Vorsprünge 18a, 18b, 18c derart ausgestaltet sind, dass diese nur in einer Orientierung z. B. gemäß eines Schlüssel-Schloss-Prinzips in die Ausnehmungen 19a, 19b, 19c einsetzbar sind. Wie in Fig. 5 anhand einer vereinfachten Draufsicht auf die Funktionseinheit 10 und die Halterung 13 dargestellt, kann dies z. B. über die Breite der Vorsprünge 18a, 18b, 18c realisiert werden. Alternativ können auch die Umrisse oder die Anzahl der Vorsprünge 18a, 18b, 18c und Ausnehmungen 19a, 19b, 19c variieren.

Zusammenfassend besitzt die erfindungsgemäße Anordnung 1 unter anderem den Vorteil, dass die Möglichkeit einer werkzeuglosen Montage von Funktionseinheiten 10 besteht, die im Wesentlichen keine Fachkenntnisse zur Installation voraussetzt. Eine derartige Installation bewirkt eine Zeitersparnis im Vergleich zu bisherigen Montagevorgängen und benötigt keine zusätzliche Fluidabsperrung. Somit können Benutzer selbstständig Funktionseinheiten 10 mittels "Poka-Yoke" gerechter Installation austauschen, ohne Fachpersonal hinzuzuziehen.

Ausdrücklich vom Offenbarungsgehalt umfasst sind auch Einzelmerkmalskombinationen (Unterkombinationen) sowie mögliche, nicht in den Zeichnungsfiguren dargestellte Kombinationen einzelner Merkmale unterschiedlicher Ausgestaltungsformen.

### BEZUGSZEICHENLISTE

- 1: Anordnung
- 2: Anschlussgehäuse
- 3: Zulauf
- 4: Ablauf
- 5: Anschlussöffnung
- 6: Kernstück
- 6a: Kernstückzulauf
- 6b: Kernstückablauf
- 7: Aufnahme
- 8: Gewindebohrung
- 9: Gewindebohrung
- 10: Funktionseinheit
- 10a: Einsatz
- 10b: Deckel
- 11a: Funktionsmodul
- 11b: Griff
- 12a, 12b: Dichtmittel
- 13: Halterung
- 14: Schraube
- 15a, 15b: Dichtungselement
- 16a, 16b: Dichtmittel
- 17a, 17b: Dichtmittel
- 18a, 18b, 18c: Vorsprung
- 19a, 19b, 19c: Ausnehmung
- 20: O-Ring
- 21: O-Ring
- AR: Anschlussrichtung
- DA: Durchflussachse

## Patentansprüche

1. Anordnung (1) zum Einbau in eine Rohrleitung eines Fluidnetzes, umfassend eine austauschbare Funktionseinheit (10) und ein Anschlussgehäuse (2), mit
einem Zulauf (3),
einem Ablauf (4), und
einer Anschlussöffnung (5) zum Anschließen der Funktionseinheit (10),
das Anschlussgehäuse (2) ein drehbar angeordnetes Kernstück (6) aufweist, durch dessen Drehung der Durchfluss des Fluids durch das Anschlussgehäuse (2) sperrbar und/oder freigebbar ist,
das Kernstück (6) eine Aufnahme (7) zum Anschließen der Funktionseinheit (10) aufweist,
die Aufnahme (7) sowie die Anschlussöffnung (5) in gleicher Richtung orientiert sind,
die Funktionseinheit (10) mit der Aufnahme (7) verbunden ist und das Drehen des Kernstücks (6) durch das Drehen der mit der Aufnahme (7) verbundenen Funktionseinheit (10) erfolgt, und
durch Drehung der Funktionseinheit (10) der Durchfluss durch das Anschlussgehäuse (2) und das Kernstück (6) freigebbar und/oder sperrbar ist, **dadurch gekennzeichnet, dass**
eine Halterung (13) das Kernstück (6) am Anschlussgehäuse (2) drehbar fixiert,
die Funktionseinheit (10) und die Halterung (13) Mittel zum Herstellen einer mechanisch lösbaren Verbindung zwischen Funktionseinheit (10) und Halterung (13) aufweisen und
die Funktionseinheit (10) in mindestens einer Drehstellung mit der Halterung (13) verriegelbar ist.

2. Anordnung (1) nach Anspruch 1, **dadurch gekennzeichnet, dass** der Zulauf (2) und der Ablauf (3) entlang einer Durchflussachse (DA) angeordnet sind und die Anschlussrichtung (AR) der Funktionseinheit (10) im Wesentlichen orthogonal zur Durchflussachse (DA) verläuft.

3. Anordnung (1) nach Anspruch 1 oder 2, **dadurch gekennzeichnet, dass** das Kernstück (6) einen Kernstückzulauf (6a) und einen vorzugsweise gegenüberliegend angeordneten Kernstückablauf (6b) aufweist, wobei vorzugsweise vorgesehen ist, dass der Kernstückzulauf (6a) sowie der Kernstückablauf (6b) jeweils mit der Aufnahme (7) verbunden sind.

4. Anordnung (1) nach Anspruch 3, **dadurch gekennzeichnet, dass** durch das Drehen des Kernstücks (6) innerhalb des Anschlussgehäuses (2) der Zulauf (3) und der Ablauf (4) des Anschlussgehäuses (2) sowie der Kernstückzulauf (6a) und der Kernstückablauf (6b) des Kernstücks (6) in Fluidverbindung bringbar sind.

5. Anordnung (1) nach einem der vorhergehenden Ansprüche, **dadurch gekennzeichnet, dass** das Kernstück (6) in die Anschlussöffnung (5) eingesetzt wird.

6. Anordnung (1) nach einem der vorhergehenden Ansprüche, **dadurch gekennzeichnet, dass** ein Dichtungselement (15a, 15b) im Bereich des Zulaufs (3) und/oder des Ablaufs (4) vorgesehen ist, welches das Anschlussgehäuse (2) gegen das Kernstück (6) abdichtet.

7. Anordnung (1) nach Anspruch 6, **dadurch gekennzeichnet, dass** das Dichtungselement (15a, 15b) ein radial, vorzugsweise gegen das Anschlussgehäuse (2), wirkendes Dichtmittel (16a, 16b) und ein axial, vorzugsweise gegen das Kernstück (6), wirkendes Dichtmittel (17a, 17b) umfasst.

8. Anordnung (1) nach Anspruch 1, **dadurch gekennzeichnet, dass** als Mittel zum Herstellen einer mechanisch lösbaren Verbindung bzw. Verriegelung an der Funktionseinheit (10) vorzugsweise Vorsprünge (18a, 18b, 18c) vorgesehen sind, die in korrespondierende Ausnehmungen (19a, 19b, 19c) der Halterung (13) eingreifen.

9. Anordnung (1) nach Anspruch 8, **dadurch gekennzeichnet, dass** als Mittel zum Herstellen einer mechanisch lösbaren Verbindung bzw. Verriegelung ein Bajonettverschluss vorgesehen ist.

10. Anordnung (1) nach einem der Ansprüche 1, 8 bis 9, **dadurch gekennzeichnet, dass** die Funktionseinheit (10) einen Durchflusskanal aufweist, welcher sich im angeschlossenen Zustand innerhalb des Kernstücks (6) befindet und mit Kernstückzulauf (6a) sowie Kernstückablauf (6b) verbunden ist.

11. Anordnung (1) nach einem der Ansprüche 1,8-10, **dadurch gekennzeichnet, dass** es sich bei der Funktionseinheit (10) um eine
- Platzhalter-Funktionseinheit und/oder
- Entkalkungs-Funktionseinheit und/oder
- Filter-Funktionseinheit und/oder
- Druckminderungs-Funktionseinheit und/oder
- Überwachungs-Funktionseinheit und/oder
- Keimreduzierungs-Funktionseinheit und/oder
- Funktionseinheit zur Bestimmung chemischer und mikrobiologischer Parameter und/oder
- Funktionseinheit zur Bestimmung von pH-Wert, elektrische Leitfähigkeit, Nitrat, Nitrit, Sulfat, Kohlenstoffdioxid, Eisen, Fluorid, Chlor, Kupfer, Phosphat, Silizium, Ammonium, Härte, Temperatur, Durchflussmenge, Karbonat, Salzgehalt, Keimanteil oder Metallanteil und/oder
- Daten-Funktionseinheit und/oder
- Kommunikations-Funktionseinheit und/oder
- Anzeige-Funktionseinheit
handelt.

12. Anordnung (1) nach einem der Ansprüche 1, 8-11, **dadurch gekennzeichnet, dass** die Funktionseinheit (10) Dichtmittel (12a, 12b) aufweist, welche die Funktionseinheit (10) gegen den Kern (6) abdichten.

13. Anordnung (1) nach einem der Ansprüche1, 8-12, **dadurch gekennzeichnet, dass** die Funktionseinheit (10) eine eigene Anschlussgeometrie aufweist.

## Claims

1. Arrangement (1) for installation into a pipeline of a fluid network, comprising
an exchangeable functional unit (10) and a connection housing (2) with
an inlet (3),
an outlet (4), and
a connection opening (5) for connection of the functional unit (10),
the connection housing (2) having a rotatably arranged core piece (6) whose rotation makes it possible for the throughflow of the fluid through the connection housing (2) to be blocked and/or released,
the core piece (6) having a receptacle (7) for connection of the functional unit (10),
the receptacle (7) and the connection opening (5) being oriented in the same direction,
the functional unit (10) being connected to the receptacle (7), and the rotation of the core piece (6) being realized by the rotation of the functional unit (10) connected to the receptacle (7), and
the rotation of the functional unit (10) making it possible for the throughflow through the connection housing (2) and the core piece (6) to be released and/or blocked, **characterized in that**
the core piece (6) is rotatably fixed to the connection housing (2) by a holder (13),
the functional unit (10) and the holder (13) have means for establishing a mechanically releasable connection between the functional unit (10) and the holder (13), and
the functional unit (10) is able to be locked to the holder (13) in at least one rotational position.

2. Arrangement (1) according to Claim 1, **characterized in that** the inlet (2) and the outlet (3) are arranged along a throughflow axis (DA), and the direction of connection (AR) of the functional unit (10) runs substantially orthogonally with respect to the throughflow axis (DA).

3. Arrangement (1) according to Claim 1 or 2, **characterized in that** the core piece (6) has a core piece inlet (6a), and a core piece outlet (6b) which is preferably arranged opposite, wherein it is preferably provided that the core piece inlet (6a) and the core piece outlet (6b) are in each case connected to the receptacle (7).

4. Arrangement (1) according to Claim 3, **characterized in that,** by rotating the core piece (6) inside the connection housing (2), the inlet (3) and the outlet (4) of the connection housing (2), and the core piece inlet (6a) and the core piece outlet (6b) of the core piece (6), are able to be brought into fluidic connection.

5. Arrangement (1) according to one of the preceding claims, **characterized in that** the core piece (6) is inserted into the connection opening (5).

6. Arrangement (1) according to one of the preceding claims, **characterized in that** a sealing element (15a, 15b) which seals off the connection housing (2) with respect to the core piece (6) is provided in the region of the inlet (3) and/or outlet (4).

7. Arrangement (1) according to Claim 6, **characterized in that** the sealing element (15a, 15b) comprises a sealing means (16a, 16b) which acts radially, preferably against the connection housing (2), and a sealing means (17a, 17b) which acts axially, preferably against the core piece (6).

8. Arrangement (1) according to Claim 1, **characterized in that** projections (18a, 18b, 18c) are preferably provided on the functional unit (10) as means for establishing a mechanically releasable connection or lock and engage into corresponding recesses (19a, 19b, 19c) of the holder (13).

9. Arrangement (1) according to Claim 8, **characterized in that** a bayonet closure is provided as a means for establishing a mechanically releasable connection or lock.

10. Arrangement (1) according to one of Claims 1, 8 and 9, **characterized in that** the functional unit (10) has a throughflow channel which, in the connected state, is situated inside the core piece (6) and is connected to the core piece inlet (6a) and the core piece outlet (6b).

11. Arrangement (1) according to at least one of Claims 1, 8-10, **characterized in that** the functional unit (10) is a
- placeholder functional unit, and/or
- descaling functional unit, and/or
- filtering functional unit, and/or
- pressure reduction functional unit, and/or
- monitoring functional unit, and/or
- germ reduction functional unit, and/or
- functional unit for determining chemical and microbiological parameters, and/or
- functional unit for determining pH, electrical conductivity, nitrate, nitrite, sulphate, carbon dioxide, iron, fluoride, chlorine, copper, phosphate, silicon, ammonium, hardness, temperature, throughflow rate, carbonate, salinity, germ content or metal content, and/or
- data functional unit, and/or
- communication functional unit, and/or
- display functional unit.

12. Arrangement (1) according to one of Claims 1, 8-11, **characterized in that** the functional unit (10) has sealing means (12a, 12b) which seal off the functional unit (10) with respect to the core (6).

13. Arrangement (1) according to one of Claims 1, 8-12, **characterized in that** the functional unit (10) has its own connection geometry.

## Revendications

1. Agencement (1) pour l'installation dans une conduite tubulaire d'un réseau fluidique, comprenant une unité fonctionnelle remplaçable (10) et un boîtier de raccordement (2), comprenant
une entrée (3),
une sortie (4), et
une ouverture de raccordement (5) pour raccorder l'unité fonctionnelle (10),
le boîtier de raccordement (2) présentant une pièce de noyau (6) disposée de manière rotative, dont la rotation permet de bloquer et/ou de libérer le passage de fluide à travers le boîtier de raccordement (2),
la pièce de noyau (6) présentant un logement (7) pour le raccordement de l'unité fonctionnelle (10), le logement (7) ainsi que l'ouverture de raccordement (5) étant orientés dans la même direction,
l'unité fonctionnelle (10) étant raccordée au logement (7) et la rotation de la pièce de noyau (6) s'effectuant par la rotation de l'unité fonctionnelle (10) raccordée au logement (7), et la rotation de l'unité fonctionnelle (10), permettant et/ou bloquant le passage à travers le boîtier de raccordement (2) et la pièce de noyau (6),
**caractérisé en ce que**
une fixation (13) fixe la pièce de noyau (6) de manière rotative sur le boîtier de raccordement (2), l'unité fonctionnelle (10) et la fixation (13) présentent des moyens pour établir une liaison desserrable mécaniquement entre l'unité fonctionnelle (10) et la fixation (13) et
l'unité fonctionnelle (10) peut être verrouillée dans au moins une position de rotation avec la fixation (13).

2. Agencement (1) selon la revendication 1, **caractérisé en ce que** l'entrée (2) et la sortie (3) sont disposées le long d'un axe de passage (DA) et la direction de raccordement (AR) de l'unité fonctionnelle (10) s'étend essentiellement perpendiculairement à l'axe de passage (DA).

3. Agencement (1) selon la revendication 1 ou 2, **caractérisé en ce que** la pièce de noyau (6) présente une entrée de pièce de noyau (6a) et une sortie de pièce de noyau (6b) disposées de préférence à l'opposé l'une de l'autre, l'entrée de pièce de noyau (6a) et la sortie de pièce de noyau (6b) étant de préférence à chaque fois raccordées au logement (7) .

4. Agencement (1) selon la revendication 3, **caractérisé en ce que,** par rotation de la pièce de noyau (6) à l'intérieur du boîtier de raccordement (2), l'entrée (3) et la sortie (4) du boîtier de raccordement (2) ainsi que l'entrée de pièce de noyau (6a) et la sortie de pièce de noyau (6b) de la pièce de noyau (6) peuvent être amenées en liaison fluidique.

5. Agencement (1) selon l'une quelconque des revendications précédentes, **caractérisé en ce que** la pièce de noyau (6) est insérée dans l'ouverture de raccordement (5).

6. Agencement (1) selon l'une quelconque des revendications précédentes, **caractérisé en ce qu'**un élément d'étanchéité (15a, 15b) est prévu dans la région de l'entrée (3) et/ou de la sortie (4), lequel étanchéifie le boîtier de raccordement (2) par rapport à la pièce de noyau (6).

7. Agencement (1) selon la revendication 6, **caractérisé en ce que** l'élément d'étanchéité (15a, 15b) comprend un moyen d'étanchéité (16a, 16b) agissant radialement, de préférence contre le boîtier de raccordement (2), et un moyen d'étanchéité (17a, 17b) agissant axialement, de préférence contre la pièce de noyau (6).

8. Agencement (1) selon la revendication 1, **caractérisé en ce que** l'on prévoit en tant que moyen pour établir une liaison ou un verrouillage desserrable mécaniquement, au niveau de l'unité fonctionnelle (10), de préférence des saillies (18a, 18b, 18c) qui s'engagent dans des évidements correspondants (19a, 19b, 19c) de la fixation (13).

9. Agencement (1) selon la revendication 8, **caractérisé en ce que** l'on prévoit en tant que moyen pour établir une liaison ou un verrouillage desserrable mécaniquement, une fermeture à baïonnette.

10. Agencement (1) selon l'une quelconque des revendications 1, 8 à 9, **caractérisé en ce que** l'unité fonctionnelle (10) présente un canal de passage qui se trouve dans l'état raccordé à l'intérieur de la pièce de noyau (6) et qui est raccordé à l'entrée de pièce de noyau (6a) ainsi qu'à la sortie de pièce de noyau (6b).

11. Agencement (1) selon l'une quelconque des revendications 1, 8 à 10, **caractérisé en ce que** l'unité fonctionnelle (10) est
- une unité fonctionnelle d'espaceur et/ou
- une unité fonctionnelle de détartrage et/ou
- une unité fonctionnelle de filtre et/ou
- une unité fonctionnelle de réduction de pression et/ou
- une unité fonctionnelle de surveillance et/ou
- une unité fonctionnelle de réduction de germes et/ou
- une unité fonctionnelle pour déterminer des paramètres chimiques et microbiologiques et/ou
- une unité fonctionnelle pour déterminer une valeur de pH, une conductibilité électrique, des nitrates, des nitrites, des sulfates, du dioxyde de carbone, du fer, du fluorure, du chlore, du cuivre, du phosphate, du silicium, de l'ammonium, une dureté, une température, une quantité de débit, des carbonates, une teneur en sel, une proportion de germes ou une proportion de métaux et/ou
- une unité fonctionnelle de données et/ou
- une unité fonctionnelle de communication et/ou
- une unité fonctionnelle d'affichage.

12. Agencement (1) selon l'une quelconque des revendications 1, 8 à 11, **caractérisé en ce que** l'unité fonctionnelle (10) présente des moyens d'étanchéité (12a, 12b) qui étanchéifient l'unité fonctionnelle (10) vis-à-vis du noyau (6).

13. Agencement (1) selon l'une quelconque des revendications 1, 8 à 12, **caractérisé en ce que** l'unité fonctionnelle (10) présente une géométrie de raccordement propre.
